# EUROPEAN PATENT SPECIFICATION

(11) **EP 4 558 247 B1**
(45) Date of publication and mention of the grant of the patent: **22.04.2026**
(21) Application number: 23753966.3
(22) Date of filing: 18.07.2023
(51) Int. Cl.: B01D 46/04, B01D 46/71, B01D 46/90, F16K 31/06, F16K 31/385, F17C 13/04

(54) **IMPROVED ASSEMBLY FOR THE CLEANING OF INDUSTRIAL FILTERS**
VERBESSERTE ANORDNUNG FÜR DIE REINIGUNG VON INDUSTRIEFILTERN
ASSEMBLAGE AMÉLIORÉ POUR LE NETTOYAGE DES FILTRES INDUSTRIELS

(30) Priority: 21.07.2022 IT 202200015345
(43) Date of publication of application: 28.05.2025
(73) Proprietor: Trimec S.r.l., 20090 Cesano Boscone (MI) (IT)
(72) Inventor: ZANONI, Massimiliano, 20090 Cesano Boscone (MI) (IT)
(74) Representative: Brunacci, Marco
(86) International application number: PCT/IB2023/057298
(87) International publication number: WO 2024/018371

(56) References cited:
- EP-A2- 1 085 244
- WO-A1-2008/096229
- CN-U- 215 486 443
- US-B1- 6 302 931

## Description

### Technical Field

The present invention relates to an improved assembly for the cleaning of industrial filters.

### Background Art

In the field of industrial air purification filters, the use of filters capable of trapping dust from sucked-in air is well known.

Filters of the bag, cartridge or pocket type are known.

These filters consist of boxes inside which are contained filtering elements which, as the flow of air to be filtered passes through, trap the solid particles to be separated and are provided with assemblies for the cleaning of the filtering elements adapted to restore their original filtering capacity, which in the operation of the appliances gradually becomes saturated.

Compressed-air cleaning assemblies are e.g. known, which substantially consist of a tubular-shaped compressed-air tank and of a plurality of outlet ducts for the air itself, conventionally called "firing" ducts, which are partly housed inside the tank and each has a first end connected to the tank by the interposition of a respective valve and a second end protruding from the tank itself and adapted to be placed in communication with the box to "fire" air on the filtering elements.

The flow of air from the tank to the firing duct is regulated by the aforementioned valve, which generally comprises a piston, a sealing ring nut, a closing ring nut, a return spring and a sealing diaphragm. The sealing ring nut and the closure bottom effectively make a two-way chamber which can be connected in a fluid-operated manner to the tank and to the firing duct depending on the position of the diaphragm. In the closure position, the diaphragm allows air to enter the tank while preventing the flow of air from the tank to the firing duct while, in the opening position, the diaphragm allows air to flow/be fired from the tank to the filters through the duct.

The jet of compressed air hitting the filtering elements causes the solid particles retained by the elements themselves to detach and collect at the bottom of the box due to gravity.

Since the air compression values inside the tank are generally very high, specific technical solutions need to be investigated in order to be able to ensure good sealing and strength of the tank and of the valve.

A first known method of making such seals is to form the diaphragm housing chamber directly on the tank lids and to weld it where the outer edge of the tank is located, thus making the seals in a conventional manner. This method of operation involves carrying out welding operations on the tank and is rather cumbersome and difficult to perform. Nevertheless, such operations expose the tank to high risks of breaking at the welding points and beyond.

WO 2008/096229 A1, US 6 302 931 B1, EP 1 085 244 A2 and CN 215 486 443 U show relevant prior art documents.

### Description of the Invention

Therefore, the main aim of the present invention is to eliminate the drawbacks listed above by making an assembly for the cleaning of industrial filters which allows simplifying the operations required for the manufacture of tanks and valves, while keeping machining costs low without affecting the quality and durability of the seals made.

As part of this technical aim, one object of the present invention is to solve the aforementioned requirements with a cleaning assembly which has a simple structure, is easy to assemble, safe to use and effective to operate.

This aim and these objects are achieved by the present assembly for the cleaning of industrial filters having the characteristics of claim 1.

### Brief Description of the Drawings

Additional characteristics and advantages of the present invention will become more apparent from the detailed description of a preferred, but not exclusive, embodiment of an assembly for the cleaning of industrial filters shown by way of an indicative, yet non-limiting example, in the attached tables of drawings in which:

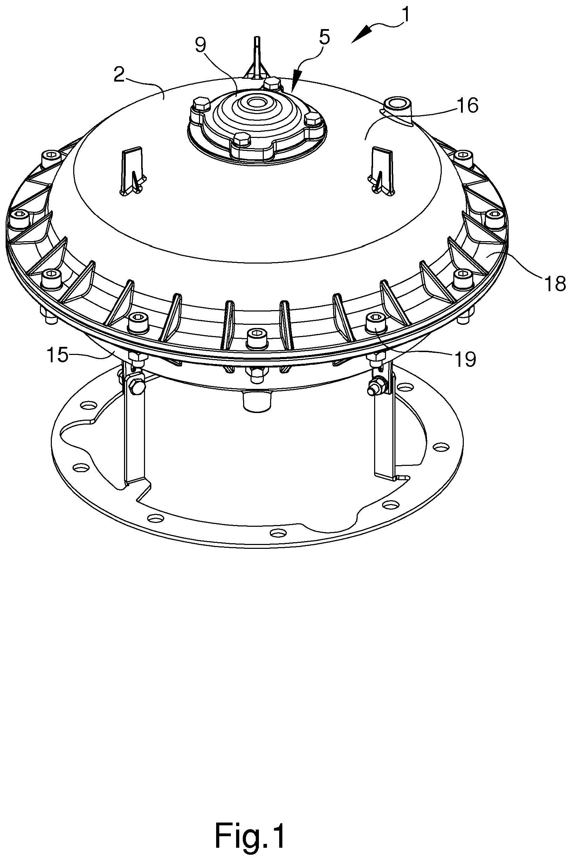

- Figure 1 is a perspective view of the assembly for the cleaning of industrial filters in accordance with the present invention;
- Figure 2 is an exploded view of the assembly in Figure 1;
- Figure 3 is a detailed view of the valve in accordance with the present invention;
- Figure 4 is a cross-sectional view of the assembly in Figure 2;
- Figures 5 and 6 are cross-sectional views of the valve in accordance with the present invention wherein the diaphragm is in the closure and in the opening positions, respectively.

### Embodiments of the Invention

With particular reference to these figures, reference numeral 1 globally denotes an assembly for the cleaning of industrial filters.

The assembly 1 comprises a storage tank 2 of a pressurized gas, e.g., compressed air.

In use, the tank 2 is provided with an upper opening 3 and with a lower opening 4 for air inlet and outlet, respectively, and which are arranged at diametrically opposite portions of the tank to each other.

The assembly 1 also comprises valve means 5 (or otherwise called valve for simplicity) for the controlled delivery of pressurized air from the tank 2 to the lower opening 4 of the tank 2.

In addition, the assembly 1 comprises a duct 6 at least partly inserted inside the tank 2 and arranged along the axial direction X-X with respect to the tank itself between the upper opening 3 and the lower opening 4. The duct 6 has a first end 7 connected to the upper opening 3 of the tank 2 through the interposition of the valve 5 and a second end 8 at least partly protruding from the lower opening 4 and associable with an industrial filter (not shown). Preferably, the ends of the duct 6 comprise externally threaded annular portions for, as will be seen below, the coupling to the valve 5 and to the industrial filter.

The duct 6 is usually called of "firing" or "lance" of the assembly 1.

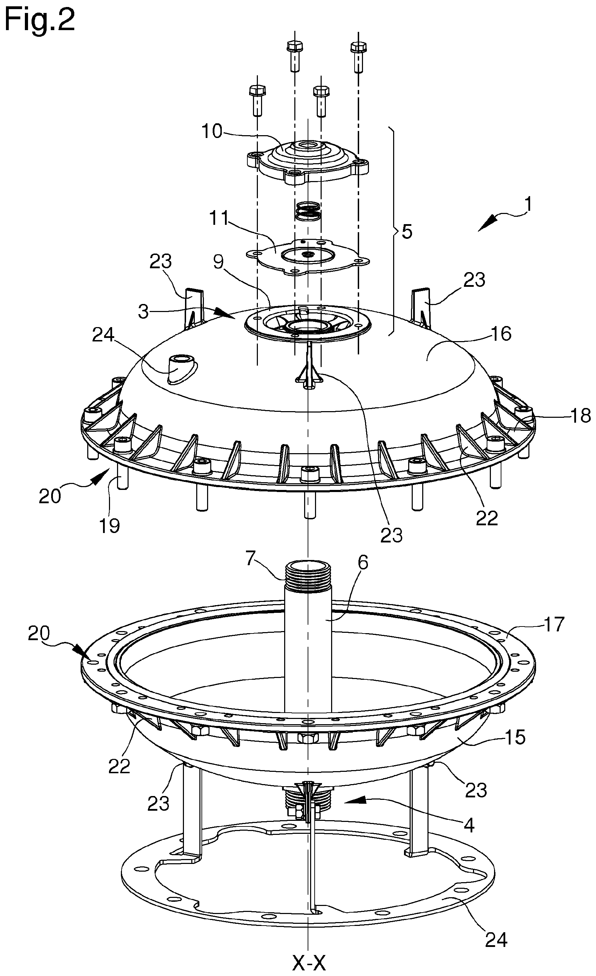

As shown in the example in Figure 2, the valve 5 comprises a lower flange 9 and an upper flange 10, as well as a diaphragm 11 placed between the flanges 9, 10.

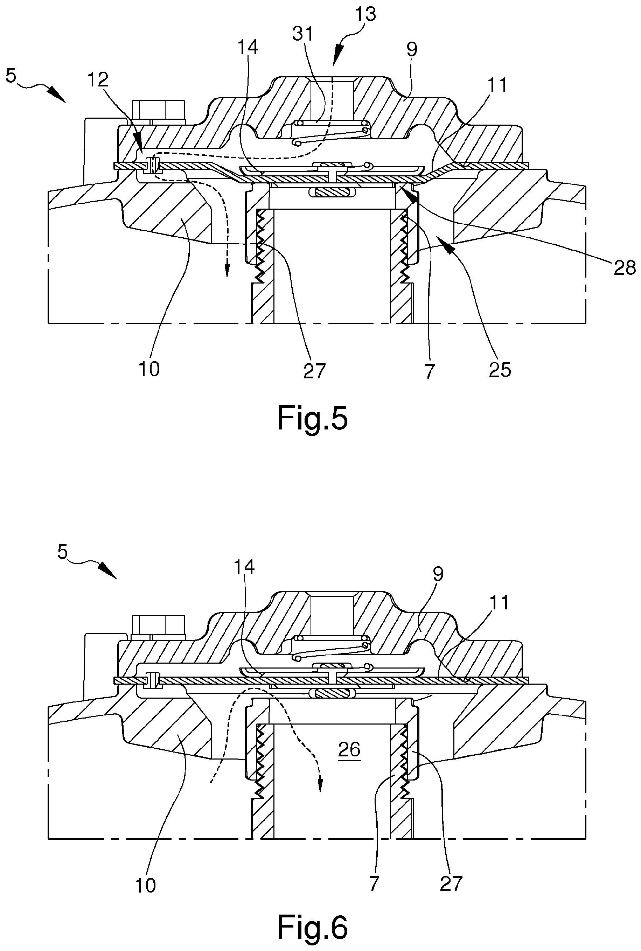

As shown in the examples in Figures 5 and 6, the diaphragm 11 is movable between a closure position, wherein it prevents the flow of air from the tank 2 to the duct 6, and an opening position which allows the flow of air (indicated by the dotted line in Figure 6) from the tank 2 to the firing duct 6. In the closure position, the diaphragm 11 is also configured to allow air (indicated by the dotted line in Figure 5) to enter the tank 2 through a tiny hole 12 drilled directly on the same diaphragm 11 in a substantially peripheral position to the latter. The air inlet into the tank 2 takes place from the upper flange 10 which, for this purpose, has an air inlet opening 13 which can be connected to an air-operated circuit through, preferably, the interposition of a fitting (not shown). In detail, during pressurization of the tank 2, air passes through the diaphragm 11 by means of the tiny hole 12; after the tank 2 being loaded to the desired pressure (e.g., equal to about 7 bar), the tank 2 and the pneumatic circuit are at the same pressure, altogether at a higher pressure than that inside the duct 6, which then allows the diaphragm 11 to close the valve 5 and prevent air from passing into the duct 6.

In accordance with one embodiment, the valve 5 comprises a metal plate 14 attached above the diaphragm 11 and having a diameter substantially corresponding to the duct diameter. Thus, the closure of the duct 6 when the diaphragm 11 is in the closure position is more effective because the diaphragm maintains a flat pattern.

Preferably, the valve 5 is associated with the actuator means, not shown because they are generally known, of the electrical or pneumatic type to control the movement of the diaphragm 11 between the closure position and the opening position.

Advantageously, the tank 2 comprises a lower half-shell 15 and an upper half-shell 16.

Preferably, each half-shell 15, 16 has the shape of a spherical dome.

Even more preferably, each half-shell 15, 16 has the shape of an elliptical or Cassini dome. In the latter case, the dome is generated by the rotation of a Cassini semi-oval. Advantageously, a Cassini dome provides the same volume as an elliptical dome but with a smaller height. The height of the dome can be selected during design on the basis of the compactness to be given to the tank and/or depending on the distribution of stresses which usually affect the edge of the cap the most.

In use, the two half-shells 15, 16 are tightly joined together. For this purpose, each half-shell 15, 16 has a circumferential extension 17, 18 where its edge is located and extended in a radial pattern by a predetermined length to define an annular portion, transverse to the axial direction X-X.

The joining of the two half-shells 15, 16 is made by means of a plurality of joining means 19, preferably of the bolt type, which can be coupled with holes 20 drilled on the circumferential extensions 17, 18 of the half-shells 15, 16 at regular intervals in a radial pattern, e.g., every 30°. The two half-shells 15, 16 are coupled to each other by matching the circumferential extensions 17, 18 and the holes 20 of the two half-shells 15, 16 to each other. In the embodiment shown, the bolts are twelve in number. However, a lower or higher number of holes, and thus of bolts, cannot be ruled out, depending on the type of intended use or application of the assembly 1.

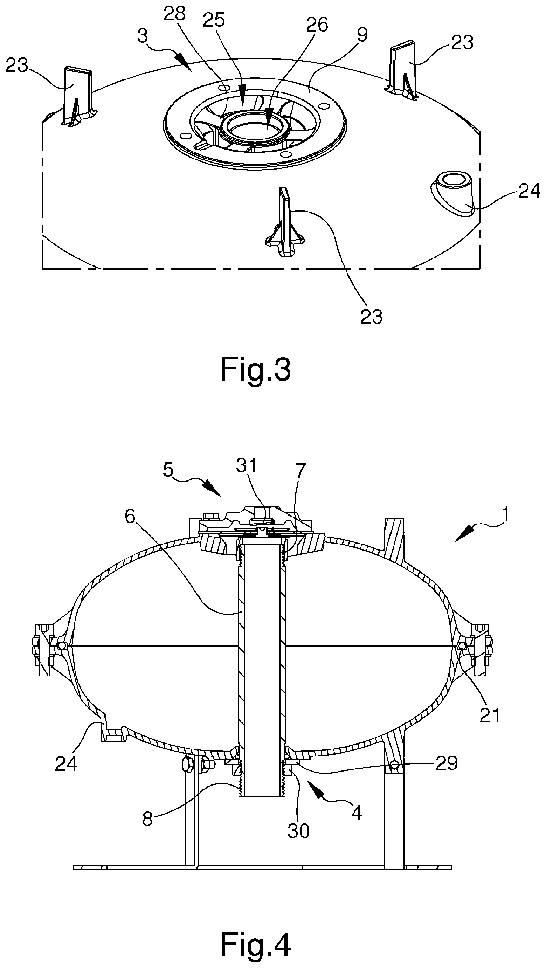

As shown in the example in Figure 4, there is a ring seal 21 arranged between the circumferential extensions 17, 18. For this purpose, each circumferential extension 17, 18 has an annular groove for the partial housing of the seal 21, the latter being made of rubber or of similar materials.

In accordance with one embodiment, each half-shell 15, 16 may comprise a plurality of triangular fins 22 arranged in a radial pattern and directed overall along the axial direction X-X. The fins 22 are arranged at the outer surface of the half-shell 15, 16 between the end portion of the half-shell itself and the circumferential extension 17, 18. These fins are also made by die-casting and allow the overall strength of the end portion of the half-shells 15, 16 to be increased. Preferably, the fins are twenty-four in number and a hole 20 is provided for every two fins 22.

In accordance with one embodiment, each half-shell 15, 16 comprises at least three extensions 23 formed on the outer surface of the shell intended to be connected to the supporting means 24 for attaching the assembly 1 to the filter box. Preferably, the supporting means 24 are connected to the extensions 23 of the lower half-shell 15 only.

Each half-shell 15, 16 also has a port 24 for connection with subsequent tanks (not shown) for possible cascade air firing. In use, the port 24 of the lower half-shell 15 is plugged while only the port 24 of the upper half-shell 16 is connected in cascade to the additional tanks.

Advantageously, the half-shells 15, 16 are made by die-casting with the same mold for both. In fact, as can be seen from the figures, the half-shells are substantially mirroring. Only one portion of the mold is dedicated to reproduce in negative the portion of the lower flange 9 of the valve 5 of the upper half-shell 16. This process allows significantly lowering the cost of manufacturing the tank.

Preferably, both the half-shells 15, 16 and the flanges 9, 10 are made of die-cast aluminum while the supporting means 24 are made of carbon steel.

The advantages of using a tank 2 as described above are many:
- supporting the internal pressure and distributing all the loads between the upper half-shell and the lower half-shell,
- mechanical strength and fatigue resistance,
- eliminating welds,
- ensuring access for maintenance.

Following several mechanical tests and FEM analysis, it has been ascertained that the ideal diameter to height ratio of each half-shell 15, 16 is comprised between 2.5 and 3.5, preferably about 3.

According to one embodiment, the valve 5 is at least partly molded directly onto the tank 2 where the upper end thereof is located. In detail, as visible in the example in Figure 3, the lower flange 9 of the valve 5 is made by die-casting directly on the upper half-shell 16 of the tank 2 at its upper end. Specifically, as mentioned above, the lower flange 9 is made by die-casting directly on the upper half-shell 16 of the tank 2.

As shown in the examples in Figures 3 and 5, the lower flange 9 has at least a first opening 25 for the air entry into the tank 2 when the diaphragm 11 is in the closure position and at least a second opening 26 for the air entry X into the duct 6 when the diaphragm 11 is in the opening position. In detail, when the diaphragm 11 is in the opening position (Figure 6), the first opening 25 is in fluid communication with the second opening 26 and then with the duct 6 for "firing" air towards the industrial filter.

The first opening 25 is used for the exit of air from the tank 2 to the firing duct 6 when the diaphragm 11 is in the opening position. Preferably, the second opening 26 of the lower flange 9 is a single central opening axially formed on the lower flange 9. Around the central opening 26 are obtained two pairs of first openings 25 arranged outside the central opening 26 in a radial pattern and at diametrically opposite portions of the flange 9 itself. A different number of first openings 25 cannot however be ruled out depending on the type of application of the cleaning assembly.

The central opening 26 extends by a cylindrical stretch 27 of predetermined length, the inner annular portion of which is threaded and intended for coupling by shape with the first end 7, also threaded, of the duct 6. As visible from the example in Figure 3, the central opening 26 has an upper circular edge 28 intended to be closed by the diaphragm 11 when the latter is in the closure position. Substantially, in the closure position of the diaphragm 11, the latter stops against the circular edge 28 so closing it (Figure 5).

As shown in the example in Figure 4, the assembly 1 also comprises a washer 29, preferably made of nylon, adapted to fit to the second end 8 of the duct 6 and subsequently a ring nut 30 which can be screwed onto the lower threaded annular portion of the duct 6 to block it in place.

As mentioned above, the assembly 1 is applied to a filter of the bag type, which is not shown in detail because it is of a conventional type; however, it is noted that the assembly 1 can be conveniently applied to other types of filters, such as cartridge or pocket filters.

It has in practice been ascertained that the described invention achieves the intended objects. Specifically, the assembly according to the invention makes it possible to increase the overall strength of the tank, to eliminate the welds by reducing the associated machining costs, to improve the distribution of the pressure loads between the upper half-shell and the lower half-shell and in the valve, and to develop a new valve design concept wherein part of the valve is directly made on the upper half-shell of the tank thus reducing the assembly errors and simplifying the assembly time.

Obviously, a branch technician, in order to meet contingent and specific needs, may make numerous modifications and variations to the cleaning assembly described above, all of which, however, are contained within the scope of protection as defined by the following claims.

## Claims

1. Assembly (1) for the cleaning of industrial filters, comprising:
a pressurized air storage tank (2) provided, in use, with an upper opening (3) and with a lower opening (4) for air inlet and outlet, respectively,
a valve (5) for the controlled delivery of pressurized air from the tank (2) to the lower opening (4),
a firing duct (6) at least partly inserted inside the tank (2) and having
a first end (7) connected to the upper opening (3) of the tank (2) through the interposition of the valve (5), and
a second end (8) at least partly protruding from the lower opening (4) and associable with an industrial filter;
**characterized by** the fact that
the tank (2) is made by a lower half-shell (15) and an upper half-shell (16) with spherical cover joined together, in a sealing manner.

2. Assembly (1) according to the preceding claim, wherein the valve (5) is at least partly molded directly onto the tank (2) at the upper end thereof.

3. Assembly (1) according to the preceding claim, wherein the valve (5) comprises:
a lower flange (9) and an upper flange (10),
a diaphragm (11) placed between the flanges (9, 10) which is movable between a closure position, wherein it prevents the passage of air, and an opening position which allows the passage of air from the tank (2) to the firing duct (6),
wherein the lower flange (9) is made by molding directly on the upper half-shell (16) of the tank (2) at the upper end thereof.

4. Assembly (1) according to the preceding claim, wherein the lower flange (9) is made by die-casting directly on the upper half-shell (16) of the tank (2).

5. Assembly (1) according to claim 3 or 4, wherein the valve (5) is associated with actuator means of the electrical, air-operated or mechanical type to control the movement of the diaphragm (11) between the closure position and the opening position.

6. Assembly (1) according to any one of claims 3 to 5, wherein the upper flange (10) has an air inlet opening associable with an air-operated circuit.

7. Assembly (1) according to any one of claims 3 to 6, wherein the lower flange (9) has at least one opening for:
- the air inlet into the tank (2) when the diaphragm (11) is in the closure position, and
- the air outlet from the tank (2) to the firing duct (6) when the diaphragm (11) is in the opening position.

8. Assembly (1) according to any one of the preceding claims, wherein the ratio of the diameter to the height of each half-shell (15, 16) is comprised between 2.5 and 3.5, preferably about 3.

9. Assembly (1) according to any one of the preceding claims, wherein the half-shells (15, 16) and the flanges (9, 10) are made of aluminum.

10. Assembly (1) according to any one of the preceding claims, comprising a ring nut (30) which is adapted to be screwed onto the protruding portion of the second end (8) of the duct (6).

## Patentansprüche

1. Anordnung (1) zum Reinigen von industriellen Filtern, umfassend:
einen Druckluftspeichertank (2), der im Betrieb mit einer oberen Öffnung (3) und einer unteren Öffnung (4) für den Lufteinlass bzw. -auslass versehen ist,
ein Ventil (5) zum gesteuerten Zuführen von Druckluft aus dem Tank (2) zu der unteren Öffnung (4),
einen Zündkanal (6), der zumindest teilweise in dem Tank (2) enthalten ist und der aufweist
ein erstes Ende (7), das über das dazwischen angeordnete Ventil (5) mit der oberen Öffnung (3) des Tanks (2) verbunden ist, und
ein zweites Ende (8), das zumindest teilweise aus der unteren Öffnung (4) herausragt und mit einem industriellen Filter verbindbar ist;
**dadurch gekennzeichnet, dass**
der Tank (2) aus einer unteren Halbschale (15) und einer oberen Halbschale (16) mit kugelförmigem Deckel besteht, die dicht miteinander verbunden sind.

2. Anordnung (1) nach dem vorhergehenden Anspruch, wobei das Ventil (5) zumindest teilweise direkt an den Tank (2) an dessen oberem Ende angeformt ist.

3. Anordnung (1) nach dem vorhergehenden Anspruch, wobei das Ventil (5) umfasst:
einen unteren Flansch (9) und einen oberen Flansch (10),
eine Membran (11), die zwischen den Flanschen (9, 10) angeordnet und zwischen einer Schließstellung, in der sie den Durchgang von Luft verhindert, und einer Öffnungsstellung bewegbar ist, in der sie den Durchgang von Luft aus dem Tank (2) zu dem Zündkanal (6) erlaubt,
wobei der untere Flansch (9) durch Anformen direkt an der oberen Halbschale (16) des Tanks (2) an dessen oberem Ende hergestellt ist.

4. Anordnung (1) nach dem vorhergehenden Anspruch, wobei der untere Flansch (9) durch Druckguß direkt an der oberen Halbschale (16) des Tanks (2) hergestellt ist.

5. Anordnung (1) nach Anspruch 3 oder 4, wobei das Ventil (5) mit elektrischen, pneumatischen oder mechanischen Betätigungsmitteln verbunden ist, um die Bewegung der Membran (11) zwischen der Schließstellung und der Öffnungsstellung zu steuern.

6. Anordnung (1) nach einem der Ansprüche 3 bis 5, wobei der obere Flansch (10) eine Lufteinlassöffnung aufweist, die mit einem pneumatischen Kreislauf verbindbar ist.

7. Anordnung (1) nach einem der Ansprüche 3 bis 6, wobei der untere Flansch (9) mindestens eine Öffnung aufweist für:
- den Lufteintritt in den Tank (2), wenn sich die Membran (11) in der Schließstellung befindet, und
- den Luftaustritt aus dem Tank (2) in den Zündkanal (6), wenn sich die Membran (11) in der Öffnungsstellung befindet.

8. Anordnung (1) nach einem der vorhergehenden Ansprüche, wobei das Verhältnis des Durchmessers zu der Höhe jeder Halbschale (15, 16) zwischen 2,5 und 3,5, vorzugsweise bei etwa 3, liegt.

9. Anordnung (1) nach einem der vorhergehenden Ansprüche, wobei die Halbschalen (15, 16) und die Flansche (9, 10) aus Aluminium bestehen.

10. Anordnung (1) nach einem der vorhergehenden Ansprüche, umfassend eine Ringmutter (30), die ausgebildet ist, auf den herausragenden Abschnitt des zweiten Endes (8) des Kanals (6) geschraubt zu werden.

## Revendications

1. - Ensemble (1) pour le nettoyage de filtres industriels, comprenant :
un réservoir de stockage d'air sous pression (2) pourvu, lors de l'utilisation, d'une ouverture supérieure (3) et d'une ouverture inférieure (4) respectivement pour l'entrée et la sortie d'air,
une soupape (5) pour la distribution contrôlée d'air sous pression du réservoir (2) à l'ouverture inférieure (4),
un conduit d'éjection (6) au moins partiellement introduit à l'intérieur du réservoir (2) et ayant
une première extrémité (7) reliée à l'ouverture supérieure (3) du réservoir (2) par l'interposition de la soupape (5), et
une seconde extrémité (8) faisant au moins partiellement saillie à partir de l'ouverture inférieure (4) et apte à être associée à un filtre industriel ;
**caractérisé par le fait que**
le réservoir (2) est constitué d'une demi-coque inférieure (15) et d'une demi-coque supérieure (16) à couvercle sphérique assemblées ensemble, de manière étanche.

2. - Ensemble (1) selon la revendication précédente, dans lequel la soupape (5) est au moins partiellement moulée directement sur le réservoir (2) à l'extrémité supérieure de celui-ci.

3. - Ensemble (1) selon la revendication précédente, dans lequel la soupape (5) comprend :
une bride inférieure (9) et une bride supérieure (10),
une membrane (11) placée entre les brides (9, 10) qui est mobile entre une position de fermeture, dans laquelle elle empêche le passage de l'air, et une position d'ouverture qui permet le passage de l'air du réservoir (2) au conduit d'éjection (6), la bride inférieure (9) étant réalisée par moulage directement sur la demi-coque supérieure (16) du réservoir (2) à l'extrémité supérieure de celui-ci.

4. - Ensemble (1) selon la revendication précédente, dans lequel la bride inférieure (9) est réalisée par moulage sous pression directement sur la demi-coque supérieure (16) du réservoir (2).

5. - Ensemble (1) selon la revendication 3 ou 4, dans lequel la soupape (5) est associée à des moyens d'actionnement du type électrique, à commande pneumatique ou mécanique pour commander le déplacement de la membrane (11) entre la position de fermeture et la position d'ouverture.

6. - Ensemble (1) selon l'une quelconque des revendications 3 à 5, dans lequel la bride supérieure (10) présente une ouverture d'entrée d'air apte à être associée avec un circuit à commande pneumatique.

7. - Ensemble (1) selon l'une quelconque des revendications 3 à 6, dans lequel la bride inférieure (9) a au moins une ouverture pour :
- l'entrée d'air dans le réservoir (2) lorsque la membrane (11) est dans la position de fermeture, et
- la sortie d'air du réservoir (2) au conduit d'éjection (6) lorsque la membrane (11) est dans la position d'ouverture.

8. - Ensemble (1) selon l'une quelconque des revendications précédentes, dans lequel le rapport du diamètre sur la hauteur de chaque demi-coque (15, 16) est compris entre 2,5 et 3,5, étant de préférence d'environ 3.

9. - Ensemble (1) selon l'une quelconque des revendications précédentes, dans lequel les demi-coques (15, 16) et les brides (9, 10) sont réalisées en aluminium.

10. - Ensemble (1) selon l'une quelconque des revendications précédentes, comprenant un écrou de blocage (30) qui est apte à être vissé sur la partie saillante de la seconde extrémité (8) du conduit (6).
